# EUROPEAN PATENT SPECIFICATION

(11) **EP 1 467 896 B1**
(45) Date of publication and mention of the grant of the patent: **14.06.2006**
(21) Application number: 03701931.2
(22) Date of filing: 15.01.2003
(51) Int. Cl.: B60R 21/01

(54) **METHOD, DEVICE AND SYSTEM FOR PREVENTING UNINTENDED DEPLOYMENT OF A CHARGED SAFETY DEVICE IN A VEHICLE OR CRAFT**
VERFAHREN, VORRICHTUNG UND SYSTEM ZUR VERHINDERUNG UNBEABSICHTIGTER ENTFALTUNG EINER FAHRZEUG ODER FLUGZEUG SICHERHEITSVORRICHTUNG
PROCEDE, DISPOSITIF ET SYSTEME POUVANT EMPECHER UN DEPLOIEMENT ACCIDENTEL D'UN DISPOSITIF DE SECURITE ARME D'UN VEHICULE OU D'UNE EMBARCATION

(30) Priority: 21.01.2002 NL 1019796
(43) Date of publication of application: 20.10.2004
(73) Proprietor: PLANTINGA, Eduard, Ronald, Mari, 9520 WE Stadskanaal (NL)
(72) Inventor: PLANTINGA, Eduard, Ronald, Mari, 9520 WE Stadskanaal (NL)
(86) International application number: PCT/NL2003/000022
(87) International publication number: WO 2003/062021

(56) References cited:
- DE-A- 4 137 146
- DE-A- 19 960 179
- US-A- 6 052 634
- US-B1- 6 296 273
- PATENT ABSTRACTS OF JAPAN vol. 1995, no. 06, 31 July 1995 (1995-07-31) -& JP 07 077141 A (HITACHI AUTOMOT ENG CO LTD), 20 March 1995 (1995-03-20)
- CAR INFORMATION RESCUE SOLUTIONS, [Online] 19 March 2001 (2001-03-19), XP002237754 Retrieved from the Internet: <URL:http://www.rescuesolutions.com/carinf o.htm> [retrieved on 2003-04-08]

## Description

An increasing number and variety of safety devices including an explosive charge and passenger protection members such as airbags, belt tighteners, active head supports and roll bars, pedal protectors and other devices (hereinafter referred to as "safety devices") are used in motor vehides, aircraft and fast boats. The explosive charge is ignited and detonates in response to accident typical conditions sensed by sensors and are intended to protect the occupants of a vehicle against the impact of a crash or other serious accident, usually by restraining movement of the passenger relative to the vehicle or craft, but in some cases in other manners, such as by moving potentially hazardous obstacles such as pedals out of the way of the passengers. An example of such a system is disclosed in U.S. patent 6 052 634, which discloses the preamble of claim 7.

In general, such safety devices have greatly increased the safety of the occupants. When none or not all of the safety devices have deployed after an accident, they can be left in an unstable condition and detonate in a delayed or unintended way. This poses a hazard to victims that have been trapped in a vehicle. Moreover, when outside help is needed to free occupants, and especially when parts of a vehicle have to be cut away, the danger exists of short-circuiting or otherwise activating safety devices that entails their unintended detonation. This has caused serious injury and even mortality under rescue workers, The present active safety devices also pose a danger during maintenance and repair of a vehicle or craft. Vehicles can contain up to 20 of these potentially explosive devices and it is impractical and sometimes impossible to deactivate them all. Disconnecting the main vehicle battery does not provide complete protection and will disrupt other (computer) systems.

German patent application 197 47 708 describes a system that allows disabling safety devices after an accident by operating destructive switches or by cutting power wires or signal wires visible in a special window. Deactivation by this system requires trained rescue personnel familiar with the system to enter the operating range of one or more of the safety devices. The safety devices will not always be secured by the system because many of the devices have an independent power source, which allow them to deploy even when disconnected from an external power source. In that case, cutting the power lines will not disarm the safety devices. In addition, because it is dependent on connections between the safety devices and a central control unit, the system can become unreliable when signal lines have been severed by an accident.

It is also described to deactivate remaining safety devices when one of them has been activated. However, it does not deactivate automatically when none of the airbags has deployed, potentially leaving all safety devices unstable and representing a potential threat to passengers and rescue workers. Rescue personnel and maintenance personnel cannot fully depend on this system. The system cannot be activated during the course of normal maintenance, because it causes a lasting damage.

It is an object of the invention to provide a very dependable solution for automatically preventing explosive charged safety devices to deploy in situations where the risk of unwanted and dangerous deployment of such safety devices is increased, such during rescue operations as after an accident or when working on the vehicle or craft.

According to the invention, this object is achieved by providing a safety device that operates in accordance with the method according to claim 1. The invention further provides a safety device according to claim 7, a passenger protection system according to claim 16 and a safety system according to claim 17 that are specifically adapted for use in the method according to claim 1.

Particular embodiments of the invention are set forth in the dependent claims.

This invention is based on the insight that useful deployment of safety devices is only indicated when a craft or vehicle is in an operating condition in which there is a risk of an accident with passengers on board, such as, while moving and/or under motor power or at least until a short time after an accident condition has been sensed, and in a short period after that.

According to a presently preferred embodiment, activation of safety devices is dependent on a running motor: it arms safety devices automatically after starting the engine, and it disarms them a short time after stopping of or shutting down the engine. After a serious accident, the motor will stop by itself or by triggering of sensors, after which any remaining safety devices will be automatically disarmed and locked. An automatic fuel cut-off will also stop the motor. After a lesser impact and during maintenance, the motor will be switched off manually, after which the safety devices will also be disarmed. The delayed disarming of the safety devices may also be made dependent on the coming to a stop of the craft or vehicle or directly dependent on the detection of an accident condition.

If the safety devices are automatically armed and disarmed, arming cannot be forgotten, and it cannot (easily) be deactivated without authorisation or unintentionally. An abnormal condition of the safety devices can be indicated on the dashboard, for example by an indicator light.

Many safety devices include a capacitor for the storage of energy, which enables deployment of the safety device, even when cut off from the main power supply of a vehicle or craft. In such a safety device, sarming may for instance be achieved by allowing charging of the capacitor only after the starting of the engine of a vehicle or craft and while the motor is running. After the stopping of the engine, the charging of this capacitor is blocked. A predetermined time after the engine has stopped the disarming electronics completely discharges this capacitor. At about the same time switches are operated causing the igniters to be isolated from the ignition control circuits and the igniters to be short-circuited, effectively locking the ignition electrically.

These switches are preferably of the normally disconnecting type and a short-circuit is preferably situated directly at or integrated into the igniters. Preferably, only an active modulated signal (for instance an alternating current) can throw these switches and unlock the ignition. The switches can be of the smart type, including a timing function, throwing the switches shortly after being activated by the modulated signal, and resetting themselves automatically with some delay (for instance about two minutes) after the modulated signal stops. These switches, of which operation requires a modulated signal, make igniters remote from the ignition control circuits a safe option. In locked position, the igniters cannot be activated unintended, not even by a short-circuit after an accident or by an erroneous signal from the ignition control circuit. Even the accidental activation of a sensor during maintenance or demolition cannot activate the explosive or pyrotechnic charges. Preferably, a short-circuiting switch is provided for each igniter. Shortly after the engine stops running, the explosive charges of safety devices cannot be activated and these are automatically and securely locked until the motor starts running again.

The power supply in the ignition capacitor can be used as power supply for the electronics of the disarming circuitry itself. When no such capacitor is available, a dedicated capacitor may be provided to supply the disarming circuitry and to keep its timers and control circuits independent of the main power supply for a short time but long enough to securely disarm and lock all safety devices when indicated.

In practice, for instance two minutes after the stopping of the motor will be a suitable time to automatically disarm the safety devices: at a serious crash it will give ample time to account for secondary impacts due to high speed or because of chain collisions. When occupants cannot escape by themselves, it will usually take more than two minutes for rescue people to reach them. They will enter the danger area only after the safety devices have (automatically) been disarmed. During maintenance of a vehicle or craft, two minutes is an acceptable time for safety devices to be disarmed. It may also be provided that the disarming occurs after a shorter delay or even instantly following a maintenance-disarming signal.

The disarming may be signalled by a short sound signal. Even safety devices removed from a vehicle or craft, which at times have been known to deploy unexpectedly, will be safer: because of the absence of the signal of a running motor, the switch will automatically disarm and lock the safety device. The delay time of the disarming system can be adjusted to a shorter time if desired, or to a longer time when at high speed. Experience or law may dictate other delay times, the essential being that the proposed way of disarming gives complete assurance that all explosive charged safety devices will be disarmed a predetermined time after the end of the operating condition in which their armed condition is desired has ended.

The indication of for instance a running motor may be acquired in different ways. Input can be via a separate data-line from the motor management system. Alternatively, the ripple on the main power lines caused by the alternator or the ignition can be detected by a separate detector or by a detector included in the safety device or in a safety device control unit to detect a running motor. Also, a simple receiver circuit (e.g. a tuned circuit) can be used to remotely detect a high frequency or light signal that is purposely transmitted as long as the motor is running. This makes a separate signal wire superfluous and is especially useful in moving parts, like a steering wheel. The essential is the detection of a running motor or other indication of the operating condition required to allow detonation of the safety devices. For maintenance and demolition, a dedicated switch can be fitted in the motor compartment to interrupt the signal of a running motor, in order to keep all safety devices disarmed and locked, even after starting the motor. Failure to reset this switch is preferably indicated by a prominent warning light on the dashboard.

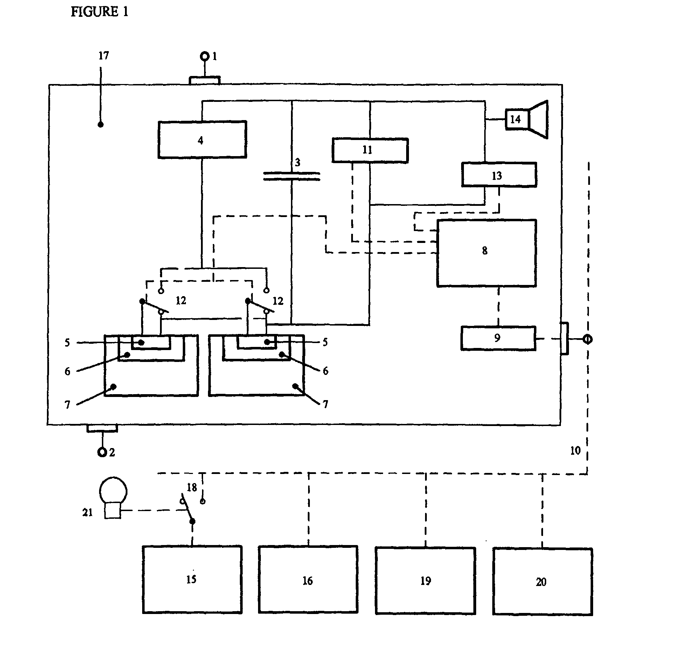

Fig. 1 shows a schematic representation of a safety system including a safety device according to the invention.

A safety device 17 has a power connection 1 to an external power supply and a returning power line 2 to the main vehicle battery. The system has an independent internal power supply 3, e.g. the ignition capacitor to safeguard an adequate time of proper functioning, even when disconnected from the main power supply. A charger 11 is incorporated in the device 17 for charging the capacitor 3. The ignition of the safety devices includes a control and ignition control circuit 4 and igniters 5 for igniting the explosives 6. The igniters are connected to and operated by the ignition control circuit 4 for controlling the igniters 5 of the explosive charges 6 to deploy the passenger protection members 7 when indicated. These may be the same as in commercially available safety devices.

The disarming controller 8 is connected to obtain its input concerning speed and motor function via a data bus 10 and an input port 9 from a running motor detector 15 and a vehicle speed signal generator 16 to allow an optimal reaction to the environment. Other safety devices 19, 20 are connected to the same data bus 9. When lacking the indication of a running engine, the charger 11 of the ignition capacitor 3 is blocked. Smart switches 12 are connected to the controller 8 and connected for switching between a position connecting the ignition control circuit 4 and the igniters 5 and the shown position in which the contacts of each of the igniters 5 are short-circuited. After an adequate delay, the smart switches 12 are operated to disconnect the igniters 5 from the ignition control circuit 4 and to short-circuit their connections directly at the igniters 5, and a discharger 13 for discharging the capacitor 3 is activated. The locking of the safety device 17 can be indicated with a short warning signal 14. The switches 12 must preferably be electronic and of the normally open type, making an active modulated signal necessary to connect the ignition circuit 4 to the igniters 5.

It will be clear to the skilled person that within the framework of the present invention many variants are conceivable. For instance, an active passenger restraint system may and will often include a plurality of safety devices and a detector for detecting the operating condition of the vehicle may be a central detector or each safety device or some of the safety devices may be provided with an associated detectors. Furthermore, unless specifically specified, instead of single functional items, two or more of such items may be provided, which operate in co-operation, in parallel or in a back-up relationship.

## Claims

1. A method for preventing the unintended or delayed deployment of a passenger protection member (7) of a safety device (17, 20, 21) in a vehicle or craft, said safety device including an explosive charge (6) and an ignition(4, 5) for igniting the explosive charge (6), including:
- detecting ending of an operative condition of the vehide or craft, and
- after a time delay in response to detection of the ending of the operative condition of the vehide or craft, automatically actuating disarming of the ignition (4, 5).

2. A method according to claim 1, including automatically arming the ignition (4, 5) in response to the detection of said operative condition of said vehicle or craft.

3. A method according to claim 1 or 2, wherein said vehide or craft is motor driven and wherein at least one feature of said operating condition is that said motor is running.

4. A method according to claim 3, wherein the running of said motor is detected by detecting an alternator ripple in the power supply.

5. A method according to claim 3 or 4, wherein the running of said motor is detected by remote sensing of a dedicated signal generated when the motor is running.

6. A method according to any one of the preceding claims, further comprising detecting the speed of the vehicle or craft and determining a duration of said time delay dependent on the detected speed.

7. A safety device for a vehicle or craft, induding :
- a passenger protection member (7) for protecting a passenger in the event of an accident;
- an explosive charge (6) for deploying the passenger protection member (7);
- an ignition (4, 5) for igniting the explosive charge (6), and
- disarming means (8, 12, 9) **characterised in that** said disarming means (8, 12, 9), after a time delay in response to a signal indicative of the ending of the operative condition of the vehicle or craft, automatically actuate disarming of the ignition (4, 5).

8. A device according to claim 7, wherein the disarming means (8,12, 9) are adapted for automatically arming the ignition (4, 5) in response to the detection of said signal indicative of said operative condition of said vehicle or craft.

9. A device according to claim 7, further comprising arming means for automatically arming the ignition (4, 5) in response to the detection of said signal indicative of said operative condition of said vehicle or craft.

10. A device according to any one of the claims 7 to 9, in which said disarming means include an input port (9) for receiving the signal indicative of the operative condition of the vehicle or craft, a controller (8) connected to said input port (9), and disarming members (12), and wherein said input port (9), said controller (8) and said disarming means (12) are integrated in said device (17).

11. A device according to any one of the claims 7 to 10, wherein the ignition includes an ignition controller (4) connected to an igniter (5) for controlling the igniter (5) and wherein said disarming means include a switch (12), which isolates the ignition controller (4) from the igniter (5).

12. A device according to claim 11, wherein said at least one switch (12) is of the normally open type, that is dosed only in the presence of a modulated activating signal indicative of the normal operating condition of the vehicle or craft, and adapted for automatic reset to the open condition with a time delay after cessation of the activating modulated signal.

13. A device according to any one of the preceding claims 7 to 10 wherein the ignition includes an igniter (5) and wherein said disarming means include a switch (12) for short-circuiting the igniter (5).

14. A device according to claim 13, wherein said at least one switch (12) for Short-circuiting the igniter (5) is of the normally dosed type, that is open only in the presence of a modulated activating signal indicative of the normal operating condition of the vehicle or craft, and adapted for automatic reset to the closed condition with a time delay after cessation of the activating modulated signal.

15. A device according to any one of the claims 11 to 14, wherein said switch is situated directly at or integrated into the igniters (5) of the explosive charges (6).

16. A passenger protection system including at least one device according to any one of the claims 7-15.

17. A safety system for preventing the unintended or delayed deployment following an accident of airbags (7), belt-tighteners, active head-rests, active roll-bars, pedalprotectors and other safety devices in a vehicle or craft using explosives or pyrotechnic charges (6), wherein it disarms and locks all safety devices (17, 20, 21) in a vehicle or craft a short time after stopping or the shutting down of the engine of that vehicle or craft, activation and arming of safety devices (17,20,21) only taking place after detection by the safety system of a running motor, the safety system being integrated in the ignition circuits of all safety devices for making these systems independent of an external safety system or connections to an external safety system.

18. A system according to claim 16 or 17, further including a detector(15) for detecting a running motor of the vehicle or craft by monitoring alternator induced voltage fluctuations in the power supply.

19. A system according to claim 18, wherein the detector (15) is adapted for generating a signal in response to detection of the motor running and wherein an input port (9) of the safety system is adapted for receiving said signal.

20. A system according to any one of the claims 16-19, further including a blocking switch (18) for blocking the detection of a running motor.

21. A system according to claim 20, further including signaling means (21) for indicating that said blocking switch (18) is in said blocking condition.

## Patentansprüche

1. Verfahren zum Verhindern des unbeabsichtigten oder verzögerten Auslösens eines Passagierschutzelements (7) einer Sicherheitsvorrichtung (17, 20, 21) in einem Verkehrsmittel oder Fahrzeug, wobei die Sicherheitsvorrichtung eine Explosivladung (6) und einen Zünder (4, 5) zum Zünden der Explosivladung (6) aufweist, mit den folgenden Schritten:
- Erkennen des Endes eines Betriebszustandes des Verkehrsmittels oder Fahrzeugs, und
- automatisches Entschärfen der Zündung (4, 5) nach einer zeitlichen Verzögerung in Reaktion auf das Erkennen des Endes des Betriebszustandes des Verkehrsmittels oder Fahrzeugs.

2. Verfahren nach Anspruch 1, mit dem automatischen Scharfmachen der Zündung (4, 5) in Reaktion auf das Erkennen des Betriebszustands des Verkehrsmittels oder Fahrzeugs.

3. Verfahren nach Anspruch 1 oder 2, bei dem das Verkehrsmittel oder Fahrzeug motorgetrieben ist und bei dem mindestens ein Merkmal des Betriebszustands ist, dass der Motor läuft.

4. Verfahren nach Anspruch 3, bei dem das Laufen des Motors durch das Erkennen der Generatorpulsation in der Stromversorgung erkannt wird.

5. Verfahren nach Anspruch 3 oder 4, bei dem das Laufen des Motors durch Fernabtasten eines zweckbestimmten Signals erkannt wird, das erzeugt wird, wenn der Motor läuft.

6. Verfahren nach einem der vorhergehenden Ansprüche, ferner mit dem Erkennen der Geschwindigkeit des Verkehrsmittels oder Fahrzeugs und dem Bestimmen der Dauer der zeitlichen Verzögerung in Abhängigkeit von dem erkannten Signal.

7. Sicherheitsvorrichtung für ein Verkehrsmittel oder Fahrzeug, mit:
- einem Passagierschutzelement (7) zum Schutz eines Passagiers bei einem Unfall;
- einer Explosivladung (6) zum Auslösen des Passagierschutzelements (7);
- einer Zündung (4, 5) zum Zünden der Explosivladung (6), und
- einer Entschärfungseinrichtung (8, 12, 9),
**dadurch gekennzeichnet, dass**
die Entschärfungseinrichtung (8, 12, 9) nach einer zeitlichen Verzögerung in Reaktion auf ein Signal, welches das Ende des Betriebszustands des Fahrzeugs angibt, die Zündung (4, 5) automatisch entschärft.

8. Vorrichtung nach Anspruch 7, bei der die Entschärfungseinrichtung (8, 12, 9) in der Lage ist, die Zündung (4, 5) in Reaktion auf das Erkennen des Signals, welches den Betriebszustand des Verkehrsmittels oder Fahrzeugs anzeigt, automatisch scharf zu machen.

9. Vorrichtung nach Anspruch 7, ferner mit einer Einrichtung zum Scharfmachen, welche die Zündung (4, 5) in Reaktion auf das Erkennen des Signals, welches den Betriebszustand des Verkehrsmittels oder Fahrzeugs anzeigt, automatisch scharf macht.

10. Vorrichtung nach einem der Ansprüche 7 bis 9, bei der die Entschärfungseinrichtung einen Eingangsport (9) zum Empfangen des Signals, welches den Betriebszustand des Verkehrsmittels oder Fahrzeugs anzeigt, einen mit dem Eingangsport (9) verbundenen Controller (8) und Entschärfungselemente (12) aufweist, und wobei der Eingangsport (9), der Controller (8) und die Entschärfungselemente (12) in der Vorrichtung (17) integriert sind.

11. Vorrichtung nach einem der Ansprüche 7 bis 10, bei der die Zündung eine Zündsteuerung (4) aufweist, die mit einem Zünder (5) zum Steuern des Zünders (5) verbunden ist, und wobei die Entschärfungseinrichtung einen Schalter (12) aufweist, der die Zündsteuerung (4) von dem Zünder (5) isoliert.

12. Vorrichtung nach Anspruch 11, bei welcher der mindestens eine Schalter (12) vom im Normalzustand offenen Typ aufweist, der nur bei Vorhandensein eines modulierten Aktivierungssignals, das den Normalbetriebszustand des Verkehrsmittels oder Fahrzeugs angibt, geschlossen ist, und der in der Lage ist, nach dem Wegfall des modulierten Aktivierungssignals zeitverzögert automatisch in den offenen Zustand zurückzukehren.

13. Vorrichtung nach einem der vorhergehenden Ansprüche 7 bis 10, bei der die Zündung einen Zünder (5) umfasst und wobei die Entschärfungseinrichtung einen Schalter (12) zum Kurzschließen des Zünders (5) aufweist.

14. Vorrichtung nach Anspruch 13, bei welcher der mindestens eine Schalter (12) zum Kurzschließen des Zünders (5) vom im Normalzustand offenen Typ ist, der nur bei Vorhandensein eines modulierten Aktivierungssignals, das den Normalbetriebszustand des Verkehrsmittels oder Fahrzeugs angibt, geschlossen ist, und der in der Lage ist, nach dem Wegfall des modulierten Aktivierungssignals zeitverzögert automatisch in den offenen Zustand zurückzukehren.

15. Vorrichtung nach einem der Ansprüche 11 bis 14, bei welcher der Schalter unmittelbar an den Zündern (5) der Explosivladungen (6) angeordnet oder in diesen integriert ist.

16. Passagierschutzsystem mit mindestens einer Vorrichtung nach einem der Ansprüche 7-15.

17. Sicherheitssystem zum Verhindern des unbeabsichtigten oder verzögerten Auslösens von Airbags (7), Gurtstraffern, aktiven Kopfstützen, aktiven Überrollbügeln, Pedalprotektoren und anderen Sicherheitsvorrichtungen in einem Verkehrsmittel oder Fahrzeug, welche explosive oder pyrotechnische Ladungen (6) verwenden, nach einem Unfall, wobei es sämtliche Sicherheitsvorrichtungen (17, 20, 21) in einem Verkehrsmittel oder Fahrzeug kurze Zeit nach dem Anhalten oder Abstellen des Motors dieses Verkehrsmittels oder Fahrzeugs entschärft und blockiert, wobei das Aktivieren und Scharfmachen der Sicherheitsvorrichtungen (17, 20, 21) nur erfolgt, nachdem das Sicherheitssystem einen laufenden Motor erkannt hat, wobei das Sicherheitssystem in den Zündschaltungen sämtlicher Sicherheitsvorrichtungen integriert ist, um diese Systeme von einem externen Sicherheitssystem oder Verbindungen mit einem externen Sicherheitssystem unabhängig zu machen.

18. System nach Anspruch 16 oder 17, ferner mit einem Detektor (15) zum Erkennen des laufenden Motors des Verkehrsmittels oder Fahrzeugs durch Überwachen von durch den Generator induzierten Spannungsfluktuationen in der Stromversorgung.

19. System nach Anspruch 18, bei dem der Detektor (15) zum Erzeugen eines Signals in Reaktion auf das Erkennen des laufenden Motors geeignet ist, und wobei ein Eingangsport (9) des Sicherheitssystems zum Empfangen des Signals geeignet ist.

20. System nach einem der Ansprüche 16-19, ferner mit einem Sperrschalter (18) zum Sperren der Erkennung des laufenden Motors.

21. System nach Anspruch 20, ferner mit einer Anzeigeeinrichtung (21) zum Anzeigen des Sperrzustands des Sperrschalters (18).

## Revendications

1. Procédé pour empêcher le déploiement accidentel ou retardé d'un élément de protection de passager (7) d'un dispositif de sécurité (17, 20, 21) dans un véhicule ou une embarcation, ledit dispositif de sécurité comprenant une charge explosive (6) et un dispositif d'amorçage (4, 5) pour amorcer la charge explosive (6), consistant à :
- détecter la fin d'une condition de service du véhicule ou de l'embarcation, et
- après un retard en réponse à la détection de la fin de la condition de service du véhicule ou de l'embarcation, actionner automatiquement le désarmement du dispositif d'amorçage (4, 5).

2. Procédé selon la revendication 1, consistant à armer automatiquement le dispositif d'amorçage (4, 5) en réponse à la détection de ladite condition de service du véhicule ou de l'embarcation.

3. Procédé selon la revendication 1 ou 2, dans lequel ledit véhicule ou ladite embarcation est motorisé et dans lequel au moins une caractéristique de ladite condition de service est que ledit moteur est en marche.

4. Procédé selon la revendication 3, dans lequel le fonctionnement dudit moteur est détecté en détectant une ondulation d'alternateur dans l'alimentation électrique.

5. Procédé selon la revendication 3 ou 4, dans lequel le fonctionnement dudit moteur est détecté par détection à distance d'un signal dédié généré quand le moteur est en marche.

6. Procédé selon l'une quelconque des revendications précédentes, consistant en outre à détecter la vitesse du véhicule ou de l'embarcation et déterminer une durée dudit retard en fonction de la vitesse détectée.

7. Dispositif de sécurité pour un véhicule ou une embarcation, comprenant :
- un élément de protection de passager (7) pour protéger un passager en cas d'accident ;
- une charge explosive (6) pour déployer l'élément de protection de passager (7) ;
- un dispositif d'amorçage (4, 5) pour amorcer la charge explosive (6), et
- des moyens de désarmement (8, 12, 9) **caractérisé en ce que** lesdits moyens de désarmement (8, 12, 9), après un retard en réponse à la détection à un signal indicatif de la fin de la condition de service du véhicule ou de l'embarcation, actionnent automatiquement le désarmement du dispositif d'amorçage (4, 5).

8. Dispositif selon la revendication 7, dans lequel les moyens de désarmement (8, 12, 9) sont adaptés pour armer automatiquement le dispositif d'amorçage (4, 5) en réponse à la détection dudit signal indicatif de ladite condition de service dudit véhicule ou de ladite embarcation.

9. Dispositif selon la revendication 7, comprenant en outre des moyens d'armement pour armer automatiquement le dispositif d'amorçage (4, 5) en réponse à la détection dudit signal indicatif de ladite condition de service dudit véhicule ou de ladite embarcation.

10. Dispositif selon l'une quelconque des revendications 7 à 9, dans lequel lesdits moyens de désarmement comprennent un port d'entrée (9) pour recevoir le signal indicatif de la condition de service du véhicule ou de l'embarcation, un dispositif de contrôle (8) connecté au dit port d'entrée (9) et des éléments de désarmement (12), et dans lequel ledit port d'entrée (9), ledit dispositif de contrôle (8) et lesdits éléments de désarmement (12) sont intégrés dans ledit dispositif (17).

11. Dispositif selon l'une quelconque des revendications 7 à 10, dans lequel le dispositif d'amorçage comprend un dispositif de contrôle d'amorçage (4) connecté à une amorce (5) pour commander l'amorce (5) et dans lequel lesdits moyens de désarmement comprennent un interrupteur (12) qui isole le dispositif de contrôle d'amorçage (4) de l'amorce (5).

12. Dispositif selon la revendication 11, dans lequel ledit au moins un interrupteur (12) est du type normalement ouvert, qui est fermé seulement en présence d'un signal d'activation modulé indicatif de la condition de fonctionnement normal du véhicule ou de l'embarcation et adapté pour une réinitialisation automatique dans la condition ouverte avec un temps de retard après la cessation du signal modulé d'activation.

13. Dispositif selon l'une quelconque des revendications précédentes 7 à 10, dans lequel le dispositif d'amorçage comprend une amorce (5) et dans lequel lesdits moyens de désarmement comprennent un interrupteur (12) pour court-circuiter l'amorce (5).

14. Dispositif selon la revendication 13, dans lequel ledit au moins un interrupteur (12) pour court-circuiter l'amorce (5) est du type normalement fermé, qui est ouvert seulement en présence d'un signal d'activation modulé indicatif de la condition de fonctionnement normal du véhicule ou de l'embarcation et adapté pour une réinitialisation automatique dans la condition fermée avec un temps de retard après la cessation du signal modulé d'activation.

15. Dispositif selon l'une quelconque des revendications 11 à 14, dans lequel ledit interrupteur est situé directement sur ou intégré dans l'amorce (5) des charges explosives (6).

16. Système de protection de passager comprenant au moins un dispositif selon l'une quelconque des revendications 7 à 15.

17. Système de sécurité pour empêcher le déploiement accidentel ou retardé à la suite d'un accident de coussins autogonflables de sécurité (7), tendeurs de ceinture, appuie-tête actifs, arceaux de sécurité actifs, protecteurs de pédale et autres dispositifs de sécurité dans un véhicule ou une embarcation utilisant des charges explosives ou pyrotechniques (6), dans lequel il désarme et verrouille tous les dispositifs de sécurité (17, 20, 21) dans un véhicule ou une embarcation un temps bref après l'arrêt ou l'extinction du moteur de ce véhicule ou cette embarcation, l'activation et l'armement de dispositifs de sécurité (17, 20, 21) étant effectués seulement après détection par le système de sécurité d'un moteur en marche, le système de sécurité étant intégré dans les circuits d'amorçage de tous les dispositifs de sécurité pour rendre ces systèmes indépendants d'un système de sécurité externe ou de connexions à un dispositif de sécurité externe.

18. Système selon la revendication 16 ou 17, comprenant en outre un détecteur (15) pour détecter un moteur en marche du véhicule ou de l'embarcation en surveillant des fluctuations de tension induites par alternateur dans l'alimentation électrique.

19. Système selon la revendication 18, dans lequel le détecteur (15) est adapté pour générer un signal en réponse à une détection du moteur en marche et dans lequel un port d'entrée (9) du système de sécurité est adapté pour recevoir ledit signal.

20. Système selon l'une quelconque des revendications 16 à 19, comprenant en outre un interrupteur de blocage (18) pour bloquer la détection d'un moteur en marche.

21. Système selon la revendication 20, comprenant en outre des moyens de signalisation (21) pour indiquer que ledit interrupteur de blocage (18) est dans ladite condition de blocage.
